# FASCICULE DE BREVET EUROPEEN

(11) **EP 4 587 752 B1**
(45) Date de publication et mention de la délivrance du brevet: **04.11.2026**
(21) Numéro de dépôt: 23768572.2
(22) Date de dépôt: 12.09.2023
(51) Int. Cl.: F21V 29/58, F21V 31/00, H01J 61/16, H01J 61/52, F16J 15/00, F16J 15/14, H01J 61/80

(54) **INSTALLATION AVEC DISPOSITIF D'ETANCHEITE POUR LAMPE**
ANLAGE MIT DICHTUNGSVORRICHTUNG FÜR EINE LAMPE
INSTALLATION WITH SEALING DEVICE FOR A LAMP

(30) Priorité: 12.09.2022 FR 2209094
(43) Date de publication de la demande: 23.07.2025
(73) Titulaire: Claranor, 84140 Avignon (FR)
(72) Inventeur: LALUBIN, Pierre, 13690 GRAVESON (FR); DUBOIS, Julien, 30650 ROCHEFORT DU GARD (FR)
(74) Mandataire: IPAZ
(86) Numéro de dépôt international: PCT/EP2023/074955
(87) Numéro de publication internationale: WO 2024/056628

(56) Documents cités:
- CN-C- 100 572 907
- JP-A- 2007 004 988
- JP-A- 2009 026 478
- US-A1- 2005 179 354

## Description

L'invention concerne une installation équipée d'un système permettant d'empêcher une fuite de fluide entre un circuit de refroidissement d'une lampe et une connexion électrique de la lampe.

### ETAT DE LA TECHNIQUE

Certaines installations industrielles utilisent des lampes dans des procédés de traitement de produits, par exemple des lampes qui émettent un rayonnement décontaminant pour assurer la décontamination de produits avant leur conditionnement.

Certaines lampes chauffent, à cause du rayonnement émis : elles doivent alors être refroidies, par exemple en faisant circuler sur les parois de la lampe un fluide de refroidissement, la lampe étant au moins partiellement entourée d'une chambre de refroidissement, dans laquelle circule le fluide.

C'est le cas, par exemple, des lampes flash, qui émettent de la lumière pulsée intense (appelées également IPL). Elles sont notamment utilisées dans l'industrie pour décontaminer des objets, des aliments ou toutes sortes de produits car la lumière intense pulsée permet notamment de supprimer instantanément les micro-organismes pathogènes ou non.

De telles lampes flash comportent usuellement un tube en quartz, qui enferme un gaz. À chacune des extrémités du tube, la lampe flash comporte deux électrodes, reliées chacune à une connexion électrique, notamment une connexion haute tension.

Le tube en quartz est entouré d'un autre tube, coaxial, en quartz également, dans lequel on fait circuler un fluide de refroidissement (par exemple de l'eau) pour limiter la montée en température de la lampe flash.

Le fluide de refroidissement ne doit pas entrer en contact avec les électrodes de la lampe ou les connexions haute-tension. Aussi il est prévu un dispositif d'étanchéité, par exemple un joint d'étanchéité, entre le tube de quartz du circuit de refroidissement et la zone de connexion électrique, dans laquelle se fait la connexion entre l'électrode et le connecteur électrique.

Malheureusement, le joint d'étanchéité finit par se détériorer, notamment à cause de l'usure naturelle du temps. Ce joint peut également s'user prématurément ou se déplacer sous l'effet des ondes de choc qui font vibrer la lampe lorsque la lampe émet son flash de lumière intense : le joint a en effet tendance à se décoller ou à se déchirer ou à se déplacer, ce qui le rend moins efficace.

La fuite de fluide conduit alors à des phénomènes non souhaitables. Par exemple, pour un refroidissement à l'eau, la fuite conduit à l'oxydation des pièces métalliques constituant l'électrode et la connectique, voire à des arcs électriques entre les pièces sous tension et les pièces raccordées à la masse. Ces phénomènes peuvent conduire à la destruction partielle des composants électriques autour de la lampe, voire des composants électroniques connectés à la lampe.

On connait du document CN 100 572 907 un installation comportant une lampe, un circuit de refroidissement de ladite lampe, au moins une zone de connexion électrique de la lampe et au moins un dispositif d'étanchéité pour assurer l'étanchéité entre ladite au moins une zone de connexion électrique de la lampe, extérieure à ladite lampe, et le circuit de refroidissement de ladite lampe, la lampe comprenant un tube apte à enfermer une source de chaleur et au moins une électrode, apte à générer ladite source de chaleur, ladite au moins une électrode étant positionnée à une extrémité du tube et raccordée à ladite zone de connexion, ledit circuit de refroidissement comprenant une chambre de refroidissement qui entoure ledit tube de la lampe et dans laquelle circule un fluide de refroidissement avec une pression de fluide de refroidissement.

On connait, par ailleurs, du document US 2005 179 354 une lampe comprenant un circuit de refroidissement, qui propose une contruction visant à faciliter l'écoulementdu fluide de refroidissement dans le circuit.

### PRESENTATION DE L'INVENTION

L'invention propose un nouveau système qui vise à remplacer le système d'étanchéité actuel des lampes flash, comprenant un simple joint et qui permet de prévenir toute fuite, ou de détecter une fuite avant qu'elle ne cause des dégâts.

L'invention concerne à cet effet une installation comportant une lampe, un circuit de refroidissement de ladite lampe, au moins une zone de connexion électrique de la lampe, extérieure à ladite lampe, et au moins un dispositif d'étanchéité pour assurer l'étanchéité entre ladite au moins une zone de connexion électrique de la lampe et le circuit de refroidissement de ladite lampe. La lampe comprend un tube apte à enfermer une source de chaleur et au moins une électrode, apte à générer ladite source de chaleur, ladite au moins une électrode étant positionnée à une extrémité du tube et raccordée à ladite zone de connexion électrique, ledit circuit de refroidissement comprenant une chambre de refroidissement qui entoure ledit tube de la lampe et dans laquelle circule un fluide de refroidissement avec une pression de fluide de refroidissement.

L'installation conforme à l'invention est remarquable en ce que ledit au moins un dispositif d'étanchéité comprend une chambre de surpression positionnée entre ladite chambre de refroidissement et ladite au moins une zone de connexion électrique, ledit au moins un dispositif d'étanchéité comprenant en outre deux joints d'étanchéité qui sont espacés l'un de l'autre en étant positionnés de part et d'autre de ladite chambre de surpression, l'un au moins des deux dits joints d'étanchéité définissant une première paroi étanche entre la chambre de refroidissement et la chambre de surpression et l'autre joint définissant une seconde paroi étanche entre la chambre de surpression et ladite au moins une zone de connexion électrique,
ladite chambre de surpression comprenant un fluide de surpression, sous une pression du fluide de surpression,
la pression du fluide de surpression étant supérieure à la pression du fluide de refroidissement présent dans la chambre de refroidissement.

Ainsi réalisée, l'installation empêche le passage du fluide de refroidissement vers l'intérieur de la chambre de surpression, en cas de fuite d'un joint d'étanchéité : en effet, la pression de la chambre de surpression étant supérieure à la pression dans la chambre de refroidissement, en cas de défaillance du joint qui les sépare, c'est le fluide de la chambre de surpression qui s'écoulera vers la chambre de refroidissement et non l'inverse.

L'installation conforme à l'invention peut également comporter les caractéristiques suivantes, prises séparément ou en combinaison :
Ladite au moins une électrode comprend une partie d'électrode saillante de l'extrémité du tube et le dispositif d'étanchéité comporte un élément coaxial au tube de la lampe et positionné autour de la partie d'électrode saillante à l'extrémité du tube, ledit élément présentant une surface extérieure. De plus, les deux joints prennent contre la surface extérieure dudit élément.

Suivant une variante de réalisation, les deux dits joints prennent appui contre la surface du tube de ladite lampe, au voisinage de l'une des extrémités du tube accueillant ladite au moins une électrode.

Avantageusement, l'installation comporte une électrovanne et un module de commande notamment de ladite électrovanne, ladite chambre de surpression étant raccordée à ladite électrovanne, pour alimenter en fluide de surpression ladite chambre de surpression.

L'installation comporte de préférence un capteur de pression apte à transmettre audit module de commande une valeur de la pression du gaz dans ladite chambre de surpression.

Le module de commande comprend en outre un dispositif de détection de variation de pression.

Ledit module de commande est avantageusement associé à un module d'alarme visuelle ou sonore, apte à délivrer un signal d'alarme visuelle ou sonore et apte à être commandé par le module de commande.

L'invention concerne également un procédé de mise en œuvre de l'installation telle que défini ci avant.

Le procédé comporte les étapes suivantes :
- on surveille la pression du fluide de surpression dans ladite chambre de surpression au moyen dudit capteur de pression, et
- si ladite pression du fluide de surpression dans la chambre de surpression est inférieure à une pression prédéterminée, on commande ladite électrovanne, au moyen du module de commande, pour introduire du fluide de surpression dans ladite chambre de surpression jusqu'à ce que la pression du fluide de surpression dans la chambre atteigne une pression interne de fonctionnement de la chambre de surpression qui est supérieure ou égale à ladite pression prédéterminée.

Suivant un mode de mise en œuvre de l'invention, il est prévu que la pression prédéterminée est inférieure de 0,5 bar par rapport à la pression interne de fonctionnement de la chambre de surpression.

De préférence, le module de commande détermine une quantité maximum de déclenchement de ladite électrovanne pendant un temps prédéterminé. De plus, le module de commande compte, pendant un temps prédéterminé, le nombre de fois où l'électrovanne a été déclenchée et, si ledit nombre de fois où l'électrovanne a été déclenchée est supérieur ou égal à ladite quantité maximum de déclenchement, le module de commande active ledit signal d'alarme visuel ou auditif.

### PRESENTATION DES FIGURES

D'autres avantages et caractéristiques de l'invention apparaîtront à l'examen de la description détaillée d'un mode de mise en œuvre nullement limitatif, et des dessins annexés, sur lesquels :
[Fig. 1] est une vue en représentation schématique d'une installation conforme à un premier mode de réalisation de l'invention, vue en coupe,
[Fig. 2] est un agrandissement du cercle II montré en figure 1,
[Fig. 3] est une représentation schématique d'une installation conforme à l'invention, montrant partiellement une lampe flash, un dispositif d'étanchéité et d'autres éléments que peut comporter une installation conforme à l'invention pour mettre en œuvre un procédé conforme à l'invention.

### DESCRIPTION DE MODES DE REALISATION DE L'INVENTION

L'exemple qui va maintenant être décrit concerne l'application de l'invention à une lampe flash qui est refroidie par un circuit de refroidissement.

Il devra être entendu que l'invention pourrait s'appliquer à toutes sortes de lampes générant de la chaleur, dont la paroi doit être refroidies et qui sont reliées à une zone de connexion électrique.

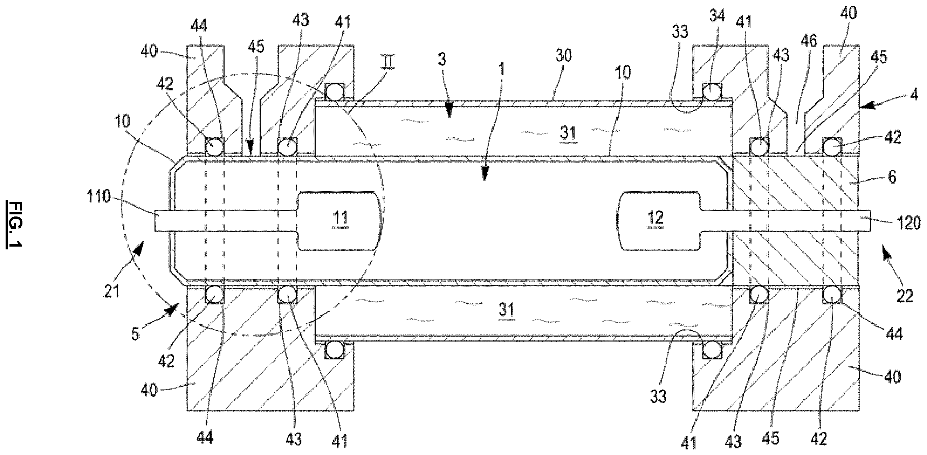

La figure 1 illustre de façon schématique un mode de réalisation d'une installation conforme à l'invention.

On y observe une lampe flash 1, comprenant un tube en quartz 10 dans lequel est emprisonné un gaz (du Xénon).

Le tube en quartz comporte, à chacune de ses extrémités fermées, une électrode 11 ou 12.

Chaque électrode 11 et 12 est reliée à une connexion électrique, notamment une connexion électrique haute tension (dans le cadre de l'exemple présenté), pour permettre l'émission d'un flash de lumière (qui est une source de chaleur) entre elles à travers le gaz contenu dans le tube de quartz : les extrémités 120 et 110 des électrodes 11 et 12 se trouvent à l'extérieur du tube de quartz (c'est-à-dire que les électrodes 11 et 12 ne se trouvent pas entièrement dans le tube de quartz et qu'elles comportent chacune une partie qui traverse le tube de quartz à son extrémité avec une partie terminale de connexion 120 et 110), ce sont les parties d'électrodes qui sont reliées à l'alimentation électrique.

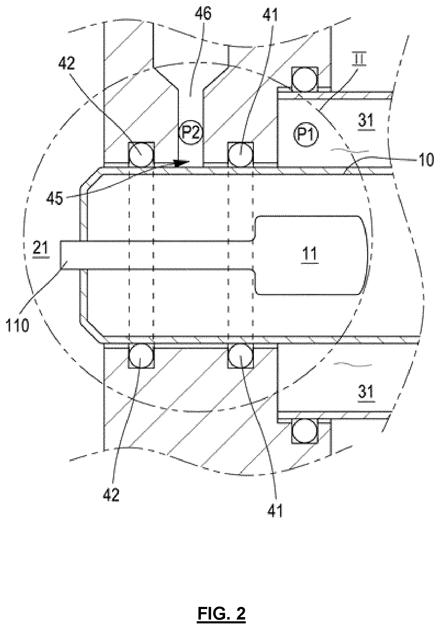

De façon symbolique, les zones portant les références 21 et 22 sur la figure 1 correspondent symboliquement aux zones de connexion électrique (haute tension) de l'installation. Les éléments des connexions électriques n'ont pas été représentés en figures 1 et 2 pour en simplifier la lecture. Néanmoins, on comprendra par zone de connexion électrique une zone à proximité immédiate de la lampe qui comprend à la fois les extrémités 110 et ou 120 des électrodes 11 et 12 ainsi que les connecteurs électriques auxquels ces extrémités 110 et 120 sont reliées.

Les lampes flash 1 chauffent :il convient donc de limiter leur monter en température. Ainsi, l'installation comprend un circuit de refroidissement de la lampe 1 : la lampe 1 sur la figure 1 est entourée d'une chambre de refroidissement 3 que comprend un tel circuit.

Concrètement, la chambre de refroidissement 3 comporte un tube de quartz 30 qui est coaxial au tube 10 de la lampe flash 1 et qui vient entourer, par l'extérieur, le tube 10.

Une zone de refroidissement est définie ainsi entre deux parois coaxiales qui correspondent aux parois des tubes 10 et 30. La chambre de refroidissement est définie entre les deux tubes 10 et 30 et s'étend entre les extrémités du tube 30 qui prennent appui contre deux supports de lampe. La chambre 3 autour de la lampe se prolonge de part et d'autre des extrémités du tube 30 : une chambre d'alimentation amont débouchant dans la chambre 3 permet de l'alimenter en fluide à l'une de ses extrémités et une autre chambre d'évacuation, prolongeant la chambre 3 en aval, à à l'opposé de la chambre d'alimentation amont, permet de recueillir le fluide de refroidissement après son passage dans la chambre de refroidissement, après contact avec la paroi 10 de la lampe 1. Le fluide de refroidissement 31 est par exemple de l'eau et le circuit de refroidissement assure que le fluide 31 soit toujours à une température restant dans une fourchette définie (usuellement entre sensiblement 20 et 40 °C), ou bien à une température constante (ou sensiblement constante) dans la chambre de refroidissement 3.

Il sera noté que l'entrée et la sortie du fluide de refroidissement 31 n'ont pas été représentées sur la figure 1 pour en simplifier la lecture.

Le fluide de refroidissement 31 se trouve à une pression de fluide P1 dans tout le circuit de refroidissement 3, y compris dans la chambre de refroidissement 3.

Le fluide de refroidissement ne doit pas pouvoir entrer en contact avec les zones de connexion électrique 22 et 21, sous peine d'endommager la lampe 1.

Aussi, l'installation comporte un dispositif d'étanchéité entre la chambre 3 du circuit de refroidissement et les zones de connexion haute tension 21 et 22. Ce dispositif va maintenant être décrit :
On voit, sur la figure 1, deux dispositifs d'étanchéité : un premier dispositif d'étanchéité 4 montré à gauche de la lampe, et un second dispositif d'étanchéité 5 montré à droite de la lampe.

Pour simplifier la compréhension des figures, les références ont été gardées d'un exemple à un autre (entre les figures 1, 2 et 3) pour les éléments communs repris d'un mode de réalisation à l'autre.

Le premier dispositif d'étanchéité 4 montré en figure 1 prend appui sur un élément 6 emmanché autour de l'extrémité 120 de l'électrode 12 : plus précisément, l'élément 6 est un élément présentant un perçage traversant axial, apte à être traversé par l'extrémité de connexion 120 de l'électrode 12 et solidaire de l'électrode de façon étanche à l'eau.

Le dispositif d'étanchéité 4 comprend un bloc 40 qui se positionne autour de l'élément 6, entre la chambre de refroidissement 3 et la zone de connexion électrique haute tension 22.

La chambre de refroidissement 3 comporte une paroi tubulaire 30, dont l'extrémité est introduite dans un logement 33 de taille complémentaire dans le bloc 40.

Un joint torique 34 assure l'étanchéité entre l'extérieur de la paroi en quartz 30 de la chambre 3 et la surface interne du logement 33 du bloc 40.

Le dispositif d'étanchéité 4 comprend également deux joints toriques d'étanchéité 41 et 42 qui sont partiellement engagés dans deux rainures 43 et 44 du bloc 40 et qui sont écrasés contre l'élément 6.

Les rainures 43 et 44 stabilisent la position des joints 41 et 42 en facilitant leur positionnement et en les maintenant en place.

Il devra être compris que les joints pourraient être de forme différente d'une forme torique, sans sortir du cadre de l'invention. De plus, les joints pourraient ne pas être insérés dans des rainures : ils pourraient être fixés par collage, par exemple, sans sortir du cadre de l'invention.

Le joint 41 forme une paroi d'étanchéité entre la chambre de refroidissement 3 et un espace « entre-joints » (c'est-à-dire entre les deux joints 41 et 42, espacés l'un de l'autre), et le joint 42 forme une paroi d'étanchéité entre l'espace entre-joint et la zone de connexion électrique haute tension 22.

L'espace « entre-joint » forme une chambre 45 entre les deux joints, et cette chambre 45 est conçue pour recevoir un fluide sous pression, de sorte que la chambre 45 sera appelée chambre de surpression 45.

Le fluide sous pression sera appelé fluide de surpression et sera un gaz dans le cadre de l'exemple présenté. Plus particulièrement, dans le cadre de cet exemple, le gaz de surpression est de l'air sous pression.

Il devra être compris que l'invention n'est pas limitée à l'utilisation spécifique de l'air pour alimenter la chambre de surpression.

Néanmoins, il est préférable que le fluide de surpression soit soluble dans le fluide de refroidissement, comme il sera expliqué par la suite.

Comme on peut le voir en figure 1, un conduit 46 débouche dans la chambre 45 de surpression, ce qui permet d'introduire le fluide de surpression (air sous pression) dans la chambre 45 jusqu'à atteindre une certaine pression P2.

La pression P2 est la pression choisie pour que le dispositif d'étanchéité remplisse sa mission : la pression P2 est supérieure à la pression P1 de fluide de refroidissement dans la chambre 3 du circuit de refroidissement.

En cas de défaillance du joint 41 entre la chambre 3 du circuit de refroidissement et la chambre de surpression, comme la pression de la chambre de surpression est supérieure à celle du fluide de refroidissement dans la chambre 3, le fluide de surpression contenu dans la chambre de surpression 45 fuira vers la chambre du circuit de refroidissement, et non l'inverse. De cette façon, le fluide de refroidissement 31 du circuit de refroidissement n'entre pas dans la chambre de surpression 45 et ne vient pas en contact avec le joint 42 qui sépare la chambre de surpression 45 de la zone de connexion électrique des électrodes 11 et 12 de la lampe 1.

Comme indiqué plus haut, le fluide de surpression est soluble dans le fluide de refroidissement, pour éviter tout inconvénient sur les propriétés de refroidissement du fluide de refroidissement.

Il est prévu également un caisson de séparation relié au circuit de refroidissement, pour séparer le fluide de refroidissement et le fluide de surpression, en aval du dispositif d'évacuation (non illustré). Le caisson de séparation permet de récupérer le fluide de refroidissement pour qu'il puisse tourner en circuit fermé. Il peut être prévu un caisson d'extraction, relié au circuit de refroidissement (le caisson n'a pas été illustré) qui permet de séparer le fluide de surpression et le fluide de refroidissement.

Le dispositif d'étanchéité 5 illustré à gauche de la lampe flash 1, en figure 1, fonctionne sur le même principe : le bloc 40 du dispositif 5 est identique au bloc 40 montré sur le dispositif d'étanchéité 4 : il s'agit d'un bloc comprenant une ouverture interne axiale traversante, dans laquelle deux rainures 43 et 44 sont ménagées sur la périphérie interne de l'ouverture interne axiale traversante, pour accueillir deux joints toriques 41 et 42. De plus, un conduit 46 est également ménagé radialement pour permette l'introduction de gaz dans l'espace situé entre les deux joints toriques 41 et 42, le conduit 46 débouche ainsi entre les deux rainures 43 et 44.

Le dispositif d'étanchéité 5 ne comporte pas d'élément 6 : les deux joints toriques 41 et 42 sont écrasés directement sur la paroi en quartz 10 de la lampe flash.

La figure 2 montre que la chambre 45 de surpression occupe peu d'espace : il s'agit juste de définir un espace clos entre les deux joints 41 et 42 et la surface du tube de la lampe et la surface inférieure du bloc 40, pour y introduire du gaz sous pression de sorte que la pression P2 dans la chambre (dans cet espace clos) soit supérieure à la pression du fluide de refroidissement P1, pour que, en cas de défaillance du joint 41, ce soit le gaz qui s'écoule de la chambre en surpression 45 vers la chambre 3 du circuit de refroidissement, et non l'inverse.

En cas de défaillance du joint 42, qui forme une paroi d'étanchéité entre la chambre de surpression 45 et la zone de connexion haute tension 21, le gaz de la chambre de surpression 45 s'échappe vers la zone de connexion haute tension 21 : cela n'aura aucune conséquence sur le fonctionnement de la lampe si le gaz ne réagit pas avec le matériau de l'électrode 11 ou 12.

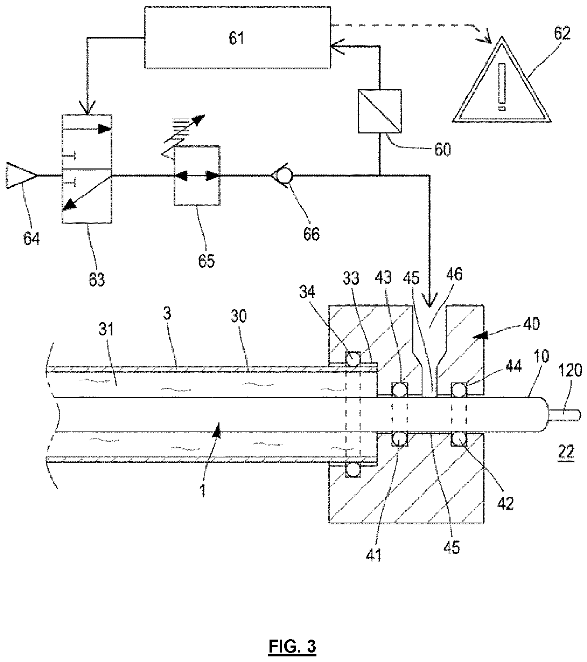

Néanmoins, ce problème de joint 42 pourra être détecté par un capteur de pression, qui détectera une baisse de la pression dans la chambre de surpression 45, comme il est prévu dans un autre exemple de réalisation de l'invention montré en figure 3 et qui va maintenant être décrit.

La figure 3 montre plus particulièrement les éléments de l'installation qui viennent compléter l'ensemble montré sur les figures 1 ou 2, pour assurer la mise en œuvre du procédé conforme à l'invention.

Sont représentés :
- Une partie de la lampe flash 1, entourée de la chambre de refroidissement 3 du circuit de refroidissement,
- Un bloc 40 du dispositif d'étanchéité, positionné contre la paroi en quartz 10 de la lampe 1 et contre la paroi en quartz 30 de la chambre de refroidissement 3,
- Un capteur de pression 60, qui est représenté symboliquement à l'extérieur de la chambre 45 de surpression : en réalité, le capteur de surpression peut être positionné dans la chambre de surpression ou à proximité de la chambre, dans le conduit d'arrivée de gaz 46 dans lequel la pression est sensiblement identique à celle de la chambre 45 : la position du capteur analogique de pression n'est pas limitative pour l'invention,
- Un module de commande 61,
- Un dispositif d'alarme 62, qui peut être visuel ou sonore, pour avertir un opérateur d'un problème d'étanchéité,
- Un distributeur de gaz (par exemple une électrovanne 63), reliée à une source de gaz sous pression 64 (par exemple de l'air comprimé),
- Un détendeur 65, en aval de l'électrovanne 63, couplé à une valve anti-retour 66.

Le bloc 40 accueille l'extrémité de la lampe 1 et deux joints 41 et 42 prennent appui contre la surface de la paroi de la lampe 1, de part et d'autre du conduit d'amenée 43 qui traverse le bloc 40 du dispositif d'étanchéité.

Le module de commande 61 assure plusieurs fonctions, notamment celle de détecter une variation de pression dans la chambre et de déterminer si cette variation de pression est critique.

Les informations de pression dans la chambre de surpression 45 sont transmises au module de commande 61 par le capteur 60.

On considère que la variation de pression est critique si elle est inférieure à 0,5 bar de la pression dite « normale », de fonctionnement de la chambre.

Par exemple, si la pression de fonctionnement de la chambre est définie à 4 bars, alors la pression critique déterminée par le module de commande est de 3,5 bars : si le capteur de pression transmet au module de commande une valeur de pression inférieure ou égale à 3,5 bars, alors le module de commande 61 déclenche l'électrovanne 63 pour injecter du gaz sous pression dans la chambre 45.

Le module de commande 61 permet également de comptabiliser le nombre de fois où il commande le fonctionnement de l'électrovanne : en effet, si l'électrovanne est activée plusieurs fois de suite, dans un intervalle de temps prédéterminé, il peut être considéré qu'il y a une fuite dans la chambre de surpression conduisant à la baisse de pression répétée dans la chambre 45.

Aussi, si le module de commande 61 détermine que l'électrovanne a été activée plus de trois fois en moins d'une journée (par exemple), alors le module de commande va déclencher le dispositif 62 d'alarme, visuel ou sonore par exemple, pour avertir l'opérateur que la chambre de surpression du dispositif d'étanchéité est défaillante :
Il s'agira par exemple d'un problème de joint 41 ou 42 à changer.

On comprend de la description qui précède comment l'invention permet d'assurer l'étanchéité entre la chambre de refroidissement de la lampe et les zones de connexion haute tension de la lampe flash, et comment également elle permet de détecter des défaillances d'étanchéité et de prévenir un opérateur en cas de problème d'étanchéité (usure des joints, par exemple) avant que le fluide de refroidissement de la lampe ne s'infiltre dans la zone de connexion haute tension.

Il devra être compris que les exemples illustrés sur les figures ne sont pas limitatifs.

## Revendications

1. Installation comportant une lampe (1), un circuit de refroidissement de ladite lampe (1), au moins une zone de connexion électrique (21, 22) de la lampe (1) et au moins un dispositif d'étanchéité (4 ; 5) pour assurer l'étanchéité entre ladite au moins une zone de connexion électrique (21, 22) de la lampe (1), extérieure à ladite lampe, et le circuit de refroidissement de ladite lampe (1), la lampe (1) comprenant un tube (10) apte à enfermer une source de chaleur et au moins une électrode (11, 12), apte à générer ladite source de chaleur, ladite au moins une électrode (11, 12) étant positionnée à une extrémité du tube (10) et raccordée à ladite zone de connexion (21, 22), ledit circuit de refroidissement comprenant une chambre de refroidissement (3) qui entoure ledit tube (10) de la lampe (1) et dans laquelle circule un fluide de refroidissement (31) avec une pression (P1) de fluide de refroidissement, ladite installation étant **caractérisée en ce que** ledit au moins un dispositif d'étanchéité (4 ; 5) comprend une chambre de surpression (45) positionnée entre ladite chambre de refroidissement (3) et ladite au moins une zone de connexion électrique (21, 22), ledit au moins un dispositif d'étanchéité (4, 5) comprenant en outre deux joints d'étanchéité (41, 42) qui sont espacés l'un de l'autre en étant positionnés de part et d'autre de ladite chambre de surpression (45), l'un (41) au moins des deux dits joints d'étanchéité (41, 42) définissant une première paroi étanche entre la chambre de refroidissement (3) et la chambre de surpression (45) et l'autre joint (42) définissant une seconde paroi étanche entre la chambre de surpression (45) et ladite au moins une zone de connexion électrique (21, 22),
ladite chambre de surpression (45) comprenant un fluide de surpression, sous pression (P2),
la pression (P2) du fluide de surpression étant supérieure à ladite pression (P1) du fluide de refroidissement présent dans la chambre de refroidissement (3).

2. Installation selon la revendication 1, **caractérisée en ce que** ladite au moins une électrode comprend une partie d'électrode (120) saillante de l'extrémité du tube (10) et **en ce que** le dispositif d'étanchéité (4) comporte un élément (6) coaxial au tube de la lampe et positionné autour de la partie d'électrode saillante (120) à l'extrémité du tube (10), ledit élément (6) présentant une surface extérieure, et **en ce que** les deux dits joints (41, 42) prennent contre la surface extérieure dudit élément (6).

3. Installation selon la revendication 1, **caractérisée en ce que** les deux dits joints (41, 42) prennent appui contre la surface du tube (10) de ladite lampe (1), au voisinage de l'une des extrémités du tube (10) accueillant ladite au moins une électrode (11, 12).

4. Installation selon la revendication 1, 2 ou 3, **caractérisée en ce qu'**elle comporte une électrovanne (63) et un module de commande (61) notamment de ladite électrovanne (63), ladite chambre de surpression (45) étant raccordée à ladite électrovanne (63), pour alimenter en fluide de surpression ladite chambre de surpression (45).

5. Installation selon la revendication 4, **caractérisée en ce qu'**elle comporte un capteur de pression (60) apte à transmettre audit module de commande (61) une valeur de la pression (P1) du gaz dans ladite chambre de surpression (45).

6. Installation selon la revendication 5, **caractérisée en ce que** ledit module de commande (61) comprend un dispositif de détection de variation de pression.

7. Installation selon la revendication 4, 5 ou 6, **caractérisée en ce que** ledit module de commande (61) est associé à un module d'alarme (62) visuelle ou sonore, apte à délivrer un signal d'alarme visuelle ou sonore et apte à être commandé par le module de commande (61).

8. Procédé de mise en œuvre de l'installation selon la revendication 6 ou 7, **caractérisé en ce qu'**il comporte les étapes suivantes :
- on surveille la pression (P2 ) du fluide de surpression dans ladite chambre de surpression (45) au moyen dudit capteur de pression (60), et
- si ladite pression (P2 ) du fluide de surpression dans la chambre de surpression est inférieure à une pression prédéterminée, on commande ladite électrovanne (63), au moyen du module de commande (61), pour introduire du fluide de surpression dans ladite chambre de surpression (45) jusqu'à ce que la pression du fluide de surpression dans la chambre atteigne une pression interne de fonctionnement de la chambre de surpression (45) qui est supérieure ou égale à ladite pression prédéterminée.

9. Procédé de mise en œuvre selon la revendication 8, **caractérisé en ce que** ladite pression prédéterminée est inférieure de 0,5 bar par rapport à ladite pression interne de fonctionnement de ladite chambre de surpression.

10. Procédé selon la revendication 8 ou 9, mettant en œuvre une installation selon la revendication 7, **caractérisé en ce que**
le module de commande (61) détermine une quantité maximum de déclenchement de ladite électrovanne (63) pendant un temps prédéterminé,
**en ce que** le module de commande (61) compte, pendant un temps prédéterminé, le nombre de fois où l'électrovanne a été déclenchée, et **en ce que**, si ledit nombre de fois où l'électrovanne a été déclenchée est supérieur ou égal à ladite quantité maximum de déclenchement, le module de commande (61) active ledit signal d'alarme visuel ou auditif (62).

## Patentansprüche

1. Anlage mit einer Lampe (1), einem Kühlkreislauf der Lampe (1), wenigstens einer elektrischen Anschlusszone (21, 22) der Lampe (1) und wenigstens einer Dichtungsvorrichtung (4; 5) zum Sicherstellen der Dichtigkeit zwischen der wenigstens einen elektrischen Anschlusszone (21, 22) der Lampe (1), die sich außerhalb der Lampe befindet, und dem Kühlkreislauf der Lampe (1), wobei die Lampe (1) ein Rohr (10), das eine Wärmequelle einschließen kann, und wenigstens eine Elektrode (11, 12), die die Wärmequelle erzeugen kann, umfasst, wobei sich die wenigstens eine Elektrode (11, 12) an einem Ende des Rohrs (10) befindet und an die Anschlusszone (21, 22) angeschlossen ist, wobei der Kühlkreislauf eine Kühlkammer (3) umfasst, die das Rohr (10) der Lampe (1) umgibt und in der ein Kühlmedium (31) mit einem Druck (P1) des Kühlmediums zirkuliert, wobei die Anlage **dadurch gekennzeichnet ist, dass** die wenigstens eine Dichtungsvorrichtung (4; 5) eine Überdruckkammer (45) umfasst, die sich zwischen der Kühlkammer (3) und der wenigstens einen elektrischen Anschlusszone (21, 22) befindet, wobei die wenigstens eine Dichtungsvorrichtung (4; 5) weiterhin zwei Dichtungen (41, 42) umfasst, die voneinander beabstandet sind, indem sie sich beiderseits der Überdruckkammer (45) befinden, wobei wenigstens eine (41) der beiden Dichtungen (41, 42) eine erste dichte Wand zwischen der Kühlkammer (3) und der Überdruckkammer (45) definiert und die andere Dichtung (42) eine zweite dichte Wand zwischen der Überdruckkammer (45) und der wenigstens einen elektrischen Anschlusszone (21, 22) definiert,
wobei die Überdruckkammer (45) ein unter Druck (P2) stehendes Überdruckfluid umfasst,
wobei der Druck (P2) des Überdruckfluids größer ist als der Druck (P1) des Kühlmediums, das sich in der Kühlkammer (3) befindet.

2. Anlage gemäß Anspruch 1, **dadurch gekennzeichnet, dass** die wenigstens eine Elektrode einen Elektrodenteil (120) umfasst, der aus dem Ende des Rohrs (10) herausragt, und dadurch, dass die Dichtungsvorrichtung (4) ein Element (6) umfasst, das koaxial zum Rohr der Lampe und um den aus dem Ende des Rohrs (10) herausragenden Elektrodenteil (120) herum angeordnet ist, wobei das Element (6) eine Außenfläche aufweist, und dadurch, dass die zwei Dichtungen (41, 42) an der Außenfläche des Elements (6) anliegen.

3. Anlage gemäß Anspruch 1, **dadurch gekennzeichnet, dass** die zwei Dichtungen (41, 42) in der Nähe des einen Endes des Rohrs (10), das die wenigstens eine Elektrode (11, 12) aufnimmt, an der Fläche des Rohrs (10) der Lampe (1) anliegen.

4. Anlage gemäß Anspruch 1, 2 oder 3, **dadurch gekennzeichnet, dass** sie ein Magnetventil (63) und ein Steuermodul (61), insbesondere für das Magnetventil (63), umfasst, wobei die Überdruckkammer (45) an das Magnetventil (63) angeschlossen ist, um die Überdruckkammer (45) mit Überdruckfluid zu versorgen.

5. Anlage gemäß Anspruch 4, **dadurch gekennzeichnet, dass** sie einen Drucksensor (60) umfasst, der an das Steuermodul (61) einen Druckwert (P1) des Gases in der Überdruckkammer (45) übermitteln kann.

6. Anlage gemäß Anspruch 5, **dadurch gekennzeichnet, dass** das Steuermodul (61) eine Vorrichtung zum Nachweis von Druckschwankungen umfasst.

7. Anlage gemäß Anspruch 4, 5 oder 6, **dadurch gekennzeichnet, dass** das Steuermodul (61) mit einem visuellen oder auditiven Alarmmodul (62) verbunden ist, das ein visuelles oder auditives Alarmsignal abgeben kann und von dem Steuermodul (61) gesteuert werden kann.

8. Verfahren zum Betrieb der Anlage gemäß Anspruch 6 oder 7, **dadurch gekennzeichnet, dass** es die folgenden Schritte umfasst:
- Überwachen des Drucks (P2) des Überdruckfluids in der Überdruckkammer (45) mittels des Drucksensors (60) und
- wenn der Druck (P2) des Überdruckfluids in der Überdruckkammer kleiner als ein vorbestimmter Druck ist, Ansteuern des Magnetventils (63) mittels des Steuermoduls (61), um Überdruckfluid in die Überdruckkammer (45) einzuleiten, bis der Druck des Überdruckfluids in der Kammer einen Innendruck der Funktion der Überdruckkammer (45) erreicht, der größer oder gleich dem vorbestimmten Druck ist.

9. Verfahren zum Betrieb gemäß Anspruch 8, **dadurch gekennzeichnet, dass** der vorbestimmte Druck kleiner als 0,5 bar ist in Bezug auf den Innendruck der Funktion der Überdruckkammer.

10. Verfahren gemäß Anspruch 8 oder 9 zum Betreiben einer Anlage gemäß Anspruch 7, **dadurch gekennzeichnet, dass**
das Steuermodul (61) eine maximale Anzahl von Auslösungen des Magnetventils (63) während einer vorbestimmten Zeit bestimmt,
dadurch, dass das Steuermodul (61) während einer vorbestimmten Zeit zählt, wie oft das Magnetventil ausgelöst wurde, und dadurch, dass dann, wenn diese Anzahl der Auslösungen des Magnetventils größer oder gleich der maximalen Anzahl von Auslösungen ist, das Steuermodul (61) das visuelle oder auditive Alarmsignal (62) aktiviert.

## Claims

1. An installation comprising a lamp (1), a circuit for cooling said lamp (1), at least one electrical connection area (21, 22) of the lamp (1) and at least one sealing device (4; 5) for sealing between said at least one electrical connection area (21, 22) of the lamp (1), external to said lamp, and the cooling circuit of said lamp (1), the lamp (1) comprising a tube (10) adapted to enclose a heat source and at least one electrode (11, 12), adapted to generate said heat source, said at least one electrode (11, 12) being positioned at one end of the tube (10) and connected to said connection area (21, 22), said cooling circuit comprising a cooling chamber (3) which surrounds said tube (10) of the lamp (1) and wherein a cooling fluid (31) circulates with a cooling fluid pressure (P1), said installation being **characterized in that** said at least one sealing device (4; 5) comprises an overpressure chamber (45) positioned between said cooling chamber (3) and said at least one electrical connection area (21, 22), said at least one sealing device (4, 5) further comprising two seals (41, 42) which are spaced apart from each other by being positioned on either side of said overpressure chamber (45), at least one (41) of said two seals (41, 42) defining a first sealing wall between the cooling chamber (3) and the overpressure chamber (45), and the other seal (42) defining a second sealing wall between the overpressure chamber (45) and said at least one electrical connection area (21, 22), said overpressure chamber (45) comprising a pressurized overpressure fluid (P2),
the pressure (P2) of the overpressure fluid being higher than said pressure (P1) of the cooling fluid present in the cooling chamber (3).

2. The installation according to claim 1, **characterized in that** said at least one electrode comprises an electrode portion (120) protruding from the end of the tube (10) and **in that** the sealing device (4) comprises an element (6) coaxial with the lamp tube and positioned around the protruding electrode portion (120) at the end of the tube (10), said element (6) having an outer surface, and **in that** said two seals (41, 42) grip the outer surface of said element (6).

3. The installation according to claim 1, **characterized in that** both of said seals (41, 42) bear against the surface of the tube (10) of said lamp (1), in the vicinity of one of the ends of the tube (10) that houses said at least one electrode (11, 12).

4. The installation according to claim 1, 2 or 3, **characterized in that** it comprises a solenoid valve (63) and a control module (61) in particular for said solenoid valve (63), said overpressure chamber (45) being connected to said solenoid valve (63), in order to supply said overpressure chamber (45) with overpressure fluid.

5. The installation according to claim 4, **characterized in that** it comprises a pressure sensor (60) capable of transmitting a value of the pressure (P1) of the gas in said overpressure chamber (45) to said control module (61).

6. The installation according to claim 5, **characterized in that** said control module (61) comprises a pressure variation detection device.

7. The installation according to claim 4, 5 or 6, **characterized in that** said control module (61) is associated with a visual or audible alarm module (62), capable of delivering a visual or audible alarm signal and capable of being controlled by the control module (61).

8. A method for implementing the installation according to claim 6 or 7, **characterized in that** it comprises the following steps:
- the pressure (P2) of the overpressure fluid in said overpressure chamber (45) is monitored by means of said pressure sensor (60), and
- if said pressure (P2) of the overpressure fluid in the overpressure chamber is less than a predetermined pressure, said solenoid valve (63) is controlled, by means of the control module (61), to introduce overpressure fluid into said overpressure chamber (45) until the pressure of the overpressure fluid in the chamber reaches an internal operating pressure of the overpressure chamber (45) which is greater than or equal to said predetermined pressure.

9. The method according to claim 8, **characterized in that** said predetermined pressure is 0.5 bar lower than said internal operating pressure of said overpressure chamber.

10. The method according to claim 8 or 9, implementing an installation according to claim 7, **characterized in that**
the control module (61) determines a maximum number of times said solenoid valve (63) is triggered during a predetermined time,
**in that** the control module (61) counts, during a predetermined time, the number of times the solenoid valve has been triggered and **in that**, if said number of times the solenoid valve has been triggered is greater than or equal to said maximum number of times, the control module (61) activates said visual or audible alarm signal (62).
